# EUROPÄISCHE PATENTANMELDUNG

(11) **EP 1 298 566 A2**
(43) Veröffentlichungstag der Anmeldung: **02.04.2003**
(21) Anmeldenummer: 02102372.6
(22) Anmeldetag: 19.09.2002
(51) Int. Cl.: G06F 17/60

(54) **Verfahren für elektronischen Austausch von Werten und serverbasierte Vorrichtung zur Durchführung des Verfahrens**

(30) Priorität: 01.10.2001 DE 10148468
(71) Anmelder: SIEMENS AKTIENGESELLSCHAFT, 80333 München (DE)
(72) Erfinder: Vindeby, Per, 81739, München (DE)

(57) **Zusammenfassung**

Das Verfahren basiert auf einem serverbasierten Ansatz, das heißt, die Werte des Wertesenders werden auf zentralen Servern verwaltet.
Auf diesem Server wird auf einem Wertekonto des Senders ein separater Wertekreditrahmen für Offline-Übertragungen verwaltet, indem der entsprechende Wertekredit für den Kreditrahmen optional auf dem Senderkonto reserviert wird.
Bei einer Online-Verbindung wird der noch verfügbare Wertekredit, der auf der intelligenten Vorrichtung gespeichert ist, wie auch die vom Empfänger geforderten Werte dem Server mitgeteilt. Das Wertekonto des Wertesenders auf dem Server wird um den verbrauchten Wertebetrag (Wertekreditrahmen abzüglich dem noch verfügbaren Wertekredit) reduziert.
Bei einer Online-Verbindung übermittelt der Server den vereinbarten Kreditrahmen zum Schreib-/Lesegerät (das z. B. beim Händler steht).
Ein übermittelter Kreditrahmen wird auf der intelligenten Vorrichtung als verfügbarer Wertekredit gespeichert. Bei Offline-Transaktionen wird der verfügbare Wertekredit auf der Vorrichtung um die an den Empfänger übermittelten Werte reduziert.

## Beschreibung

### Fachgebiet der Erfindung

Die Erfindung betrifft ein Verfahren für den elektronischen Austausch von Werten in einem Kommunikationsnetz.

Elektronische Systeme für die Übermittlung von Werten sind schon seit längerer Zeit im Einsatz und werden immer beliebter. Dabei findet die Übermittlung von Werten in der Regel als Gegenleistung für den Erhalt von Dienstleistungen und Waren statt. Bei bisherigen elektronischen Verfahren befinden sich die Werte entweder auf einem Trägermedium des Benutzers (z. B. auf einer Chip-Karte wie bei der Geldkarte) oder auf zentralen Servern (bekannteste Beispiele sind die EC-Karte und die Kreditkarte).
- Werte auf einem Trägermedium:
   Dieses Verfahren ermöglicht eine schnelle Übermittlung von Werten von einem Sender zu einem Empfänger ohne dass es einer Online-Anbindung des Empfängersystems an einen zentralen Server bedarf. Gelangt das Trägermedium jedoch in den Besitz einer anderen Person (z. B. durch Diebstahl), können diese Werte auch von diesen missbräuchlich genutzt werden. Deshalb ist bei der Geldkarte - welche als Bargeldersatz genutzt wird - der maximale verfügbare Geldwert bei diesem System in der Regel begrenzt ist.
   Ein weiterer Nachteil dieses Systems ist, dass auf die Werte nur mit dem jeweiligen Trägermedium zugegriffen werden kann. Eine andere Nutzung, wie z. B. das Übermitteln der Werte als Gegenleistungfür die Nutzung von bestimmten Diensten mit dem Handy, kann nicht oder nur sehr umständlich von diesem Wertguthaben abgebucht werden. Hierfür benötigt der Benutzer, etwa von unterwegs, ein entsprechendes Schreib-/Lesegerät (für das Trägermedium) mit einer geeigneten Netzverbindung zum System des Empfängers.
- Werte auf zentralen Servern:
   Bei serverbasierten elektronischen zur Übermittlung von Werten sind die Werte auf zentralen Servern gespeichert. Will ein Benutzer mit einem solchen System für die Nutzung von Waren oder Dienstleistungen Werte übermitteln, so muss in der Regel erst abgefragt werden, ob sich auf seinem Wertekonto, auf den zentralen Servern, ausreichende Werte befinden.
   Hierfür ist jedoch eine Online-Datenverbindung zwischen der Verkaufsstelle (Front-End) beim Werteempfänger (z. B. Kassensystem oder Verkaufsautomat) und dem Wertekonto auf dem Server notwendig. In vielen Szenarien, insbesondere bei sehr kleinen Werten (z. B. Micro-payment), ist ein Online-Betrieb jedoch nicht wirtschaftlich und effektiv:
   - Der notwenige Netzzugang muss realisiert werden
   - Es fallen Übertragungsgebühren an
   - Zeitverzögerung für die Abfrage beim Server
   Das serverbasierte Verfahren bietet höhere Sicherheit (kein Verlust der Werte bei Verlust des Trägermediums), setzt jedoch für eine Übermittlung der Werte eine Online-Datenverbindung vom Front-End zum Server voraus. Ein Nachteil ist, daß eine Werteübermittlung unmöglich wird sobald die Datenverbindung unterbrochen ist, beispielsweise in einem Störungsfall.

Bisher wird das Problem so gelöst, dass es unterschiedliche Verfahren für die jeweiligen Anforderungen gibt, wie z. B. bei Bezahlvorgängen die Verwendung einer Geldkarte bei kleinen Beträgen (Micro-payment) und die EC/Kreditkarte für größere Beträge (Macro-payment). Aus Sicht des Werteempfängers (Händler) und Wertesenders (Kunde) ist dieser Ansatz jedoch nicht besonders attraktiv, da es für den Empfänger oft zusätzlichen Aufwand/Kosten bedeutet und der Sender seine Werte verschiedenen Verfahren zuordnen muss. Auch wenn es bereits Lösungen gibt, die z.B. sowohl Geldkarte und EC-Karte auf einer Karte kombinieren, so sind die Verfahren getrennt und auch die Werte separat gespeichert.

### Stand der Technik

Aus der WO 00/67177 ist bereits ein Verfahren zum elektronischen Übertragen von Werten bekannt, das sowohl in einem On-Line als auch im Offline Zustand funktioniert. Während einer Offline-Periode durchgeführte Transaktionen werden in einem Endgerät gespeichert und bei der nächsten Synchronisationsphase zur Server übertragen. Ein Nachteil der bekannten Lösung ist, daß bei während eines Offline Zustandes durchgeführte Transaktionen nicht gesichert ist, daß die Transaktionssumme auch vom Werteguthaben gedeckt ist.

Aufgabe der Erfindung ist es, ein serverbasiertes Verfahren anzugeben, das die Übermittlung von Werten im Online- und Offline-Betrieb ermöglicht, unter Vermeidung der oben genannten Nachteile sowie eine Vorrichtung zur Durchführung des Verfahrens.

### Darstellung der Erfindung

Diese Aufgabe wird gelöst durch ein Verfahren gemäß Patentanspruch 1 und 8 und eine Vorrichtung gemäß Patentanspruch 10.

Das vorgeschlagene Verfahren basiert auf einem serverbasierten Ansatz, das heißt, die Werte des Wertesenders werden auf zentralen Servern verwaltet.
Auf diesem Server wird auf einem Wertekonto des Senders ein separater Wertekreditrahmen für Offline-Übertragungen verwaltet, indem der entsprechende Wertekredit für den Kreditrahmen optional auf dem Senderkonto reserviert wird.
Bei einer Online-Verbindung wird der noch verfügbare Wertekredit, der auf der intelligenten Vorrichtung, damit ist Trägermedium in Form von z.B. Chip-Karte, Transponder-Karte oder auch einer SIM-Karte im Handy gemeint, gespeichert ist, wie auch die vom Empfänger geforderten Werte dem Server mitgeteilt. Das Wertekonto des Wertesenders auf dem Server wird um den verbrauchten Wertebetrag (Wertekreditrahmen abzüglich dem noch verfügbaren Wertekredit) reduziert.
Bei einer Online-Verbindung übermittelt der Server den vereinbarten Kreditrahmen zum Schreib-/Lesegerät (das z. B. beim Händler steht).
Ein übermittelter Kreditrahmen wird auf der intelligenten Vorrichtung als verfügbarer Wertekredit gespeichert. Bei Offline-Transaktionen wird der verfügbare Wertekredit auf der Vorrichtung um die an den Empfänger übermittelten Werte reduziert.

Vorteilhafte Ausgestaltungen und Weiterbildungen sind in den Unteransprüchen angegeben.

Der Wertesender (Kunde) hat eine intelligente Vorrichtung (Trägermedium in Form von z.B. Chip-Karte, Transponder-Karte, SIM-Karte im Handy) mit der er sich ausweisen kann und auch diese Daten gespeichert werden können. Der Werteempfänger (z. B. Verkaufsstellen bei einem Händler in einem Geschäft oder an einem Verkaufsautomaten) verfügt über ein geeignetes Lese/Schreibgerät, welches die intelligente Vorrichtung des Benutzers lesen und beschreiben kann. Die Übermittlung der Daten kann auf unterschiedlichen Weise stattfinden, z. B. durch Abgreifen der Kontakte einer Chip-Karte oder kontaktlos via Funk und Infrarot.

Wenn die Verkaufsstelle zwecks Werteübermittlung eine Online-Datenverbindung zum Server des Wertesenders aufbaut, werden die eingeforderten Werte vom Wertekonto des Wertesenders zum Werteempfänger übertragen. Hierfür hat der Werteempfänger ebenfalls ein geeignets Wertekonto, welches aber hier nicht weiter relevant ist.

Bei einer Online-Verbindung zum Server sollte der Sender die Werteübermittlung autorisieren. Dies kann mit dem Fachmann bereits bekannten Verfahren, beispielsweise mit einer Geheimnummer (PIN) oder mit biometrischen Verfahren (z. B. Fingerabdruck) stattfinden.

Um jedoch Werteübermittlungen auch im Offline-Betrieb (d. h. es ist keine Online-Datenverbindung zum Server des Wertesenders vorhanden) zu ermöglichen, wird auf der intelligenten Vorrichtung ein Wertekreditrahmen festgesetzt. Die Höhe des Kreditrahmens kann zwischen Wertesender und dem Verfahrensanbieter vereinbart werden.

Wenn der Sender eine Werteübermittlung durchführen will, der Vorgang aber im Offline-Betrieb abgewickelt wird, so wird der Wertekreditrahmen auf der intelligenten Vorrichtung um die übermittelten Werte reduziert und der Empfang der Werte dem Werteempfänger bestätigt. Der Sender kann in diesem Fall maximal so viele Werte übermitteln, wie der gespeicherte Wertekreditrahmen zulässt. Darüber hinaus kann auch eine Transaktionshistorie auf der intelligenten Vorrichtung gespeichert sein. Die Wertetransaktion auf das Konto des Werteempfängers kann dann gemäss heutigen Standardverfahren übermittelt werden (z. B. Einreichung der elektronischen Transaktionsbelege am Ende jedes Monats).

Ob der Werteempfänger den Offline- oder Online-Betrieb nutzt, kann eine Entscheidung des Werteempfängers sein, wobei der Betreiber des Wertesystems bestimmte Vorgaben geben kann. Prinzipiell ist der Offline-Betrieb für die Übermittlung von sehr kleinen Werten und Wertübermittlungen die zeitlich schnell abzuwickeln sind, vorgesehen, z. B. der Bezahlvorgang an einem Fahrkartenautomaten mit hohem Andrang. Der Vorteil der Online-Übermittlung für den Werteempfänger ist andererseits, dass größere Wertebeträge praktikabel sind und das er prinzipiell sein Werteguthaben sofort erhält.

Sobald der Sender eine Werteübermittlung vornimmt, bei deren Übermittlung die Verkaufsstelle eine Online-Datenverbindung zum Server aufbaut, wird die Reduzierung der Werte für die unmittelbar bezogene Ware oder Dienstleistung direkt auf dem Server vorgenommen. Es kann außerdem auch automatisch der in Anspruch genommene Wertekredit vom Konto abgebucht und der Kreditrahmen auf der intelligenten Vorrichtung wieder zurückgesetzt werden. Das Zurücksetzen des Kredits findet auch dann statt, wenn die Online-Übermittlung bei einem anderen Werteempfänger stattfindet als vorhergehende Offline-Abwicklungen. Es können auch speziell hierfür vorgesehene "Aufladeautomaten" existieren. Vorteilhafterweise kann der Wertekreditrahmen auch an oder via einem Internet-PC mit einem angeschlossenem Schreib-/Lesegerät für die intelligente Vorrichtung zurückgesetzt werden.

Für den bewilligten Wertekreditrahmen auf der intelligenten Vorrichtung des Senders kann der Anbieter des Werteaustauschsystems zu seiner Sicherheit den entsprechenden Wertebetrag auf dem Konto des Senders reservieren. Dies ist vor allem bei reinen Guthabenkonten (Prepaid) sinnvoll, da diese in der Regel keine negativen Werte aufweisen dürfen. Somit ist sichergestellt, dass der genutzte Wertekredit immer gedeckt ist. Aber auch in Szenarien wo der Betreiber eines Werteaustauschsystems ein Guthaben auf dem Konto verzinst, könnte die reservierten Werte von Verzinsung ausgeschlossen sein (da die Werte ja vom Benutzer verbraucht sein könnten)

Prinzipiell kann anstatt eines Kreditrahmens auch ein Werteguthaben auf der intelligenten Vorrichtung gespeichert sein. Für Werteübermittlungen im Online-Betrieb steht dann das gesamte Guthaben dem Sender zur Verfügung: Das Guthaben auf dem Konto plus der ungenutzte Kreditrahmen auf der intelligenten Vorrichtung.

Die Verkaufsstelle kann über eine Anzeigemöglichkeit verfügen, welche dem Sender ermöglicht seinen verfügbaren Wertekredit zu erfahren. Diese Funktionalität kann auch über andere Geräte wie z. B. PC mit einem geeigneten Schreib/Lesegerät realisiert werden.

Für den Sender ergeben sich viele Vorteile des Verfahrens:
Ein Sender kann in einer transparenten Art Micro- und Macropaymentmit nur einer intelligenten Vorrichtung abwickeln. Der Sender braucht so nur ein Konto und muss sein Werteguthaben nicht für Micro- und Macro-payment aufteilen (wie heute bei Verwendung der Geld-Karte und parallel der EC-Karte).
Da es sich um ein serverbasiertes System handelt, kann auch über andere Wege auf das Konto zugegriffen werden, und erlaubt somit "off-site" Transaktionen (d. h. nicht vor Ort) wie z. B. bei Werteübermittlungen mit Handy oder Internet möglich.
Sehr kleine Werte können schnell, einfach und wirtschaftlich übermittelt und abgebucht werden, da keine Online-Verbindung zum Server notwendig ist. Für die Sender entstehen so geringere Kosten, da die Verkaufsstellen - vor allem für Kleinstbeträge - keine Online-Datenanbindung für Übermittlung der Werte haben müssen. Außerdem erhält man so eine hohe Verfügbarkeit, da auch im Offline-Betrieb (bei Ausfall der Online-Datenverbindung zum Server) Werteübermittlungen möglich sind - jedoch nur bis zum jeweiligen Kreditrahmen auf der intelligenten Vorrichtung. Dem Werteempfänger kann die Werteübermittlung bei beiden Varianten (online oder offline) garantiert werden, da die Abbuchung in Real-Zeit vorgenommen werden kann und die Werte für den Kreditrahmen auf der intelligenten Vorrichtung entsprechend auf dem Konto reserviert sind.

Der Kreditrahmen wird automatisch wieder zurückgesetzt, sobald der Benutzer eine Werteübermittlung im Online-Betrieb vornimmt. Spezielle "Aufladeautomaten" oder auch Verfahren über Internet am PC können ebenfalls genutzt werden.

Zur Sicherheit des Betreibers des Werteaustauschsystems kann der Kreditrahmen auf dem Konto des Benutzers reserviert werden.
Es ergibt sich ein begrenztes Risiko: Bei Verlust der intelligenten Vorrichtung verliert der Sender maximal den noch verfügbaren Kreditrahmen, wobei die intelligente Vorrichtung nur dort eingesetzt werden kann, wo keine Online-Verbindung zum Server aufgebaut wird (da ansonsten die Werteübermittlung authorisiert werden muss). Weiter wird der Kreditrahmen in der Regel erheblich geringer sein als bei reinen "Offline"systemen (z. B. das Guthaben auf einer Geldkarte) da größere Werte (Macro-payment) in der Regel ohnehin direkt über den Server laufen.
Flexibilität beim Werteempfänger: Der Empfänger entscheidet (z. B. je nach Betragshöhe), ob er den Online- oder Offline-Betrieb nutzen will.

Der Sender kann gegenüber dem Empfänger anonym sein.
Das System unterstützt sowohl Konten die ausschliesslich positive Werte halten sollen (Prepaid-Konten) mit Realzeit-Anforderungen wie auch herkömmliche Konten.

### Kurzbeschreibung der Zeichungen

Im folgenden wird die Erfindung anhand von Ausführungsbeispielen erläutert. Dabei zeigen
Figur 1 ein Ablaufdiagramm für eine Offline Werteübermittlung,
Figur 2 ein Ablaufdiagramm für eine Online Werteübermittlung,
Figur 3 den Aufbau eines erfindungsgemäßen Systems, und
Figur 4 ein Flußdiagramm für einen Abbuchungsvorgang.

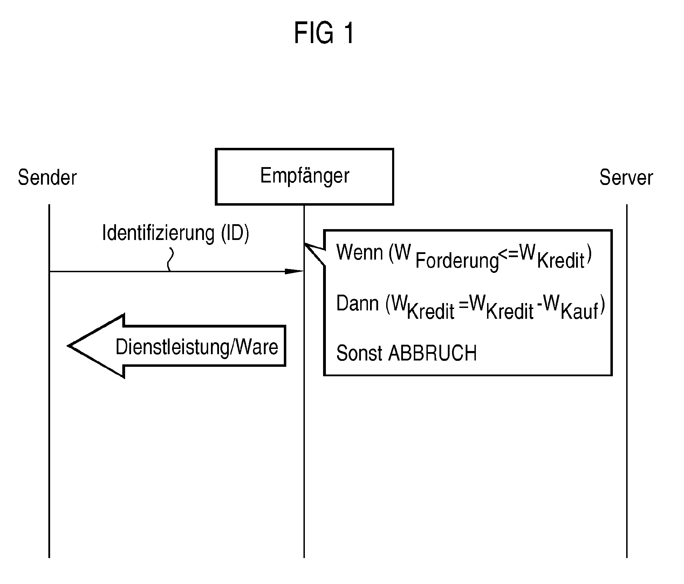

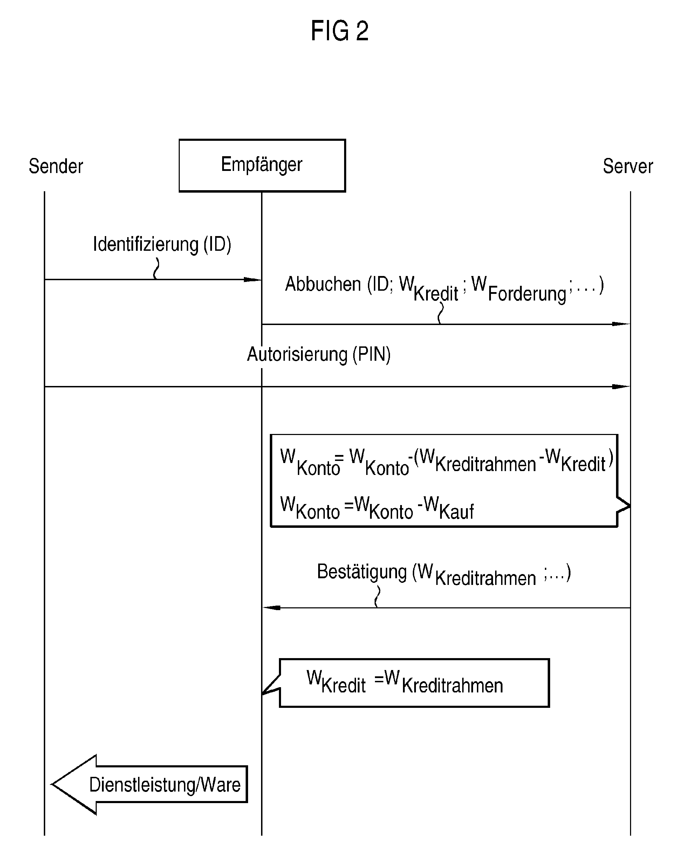

Das folgende Diagram zeigt einen möglichen Ablauf zuerst ohne Online-Abfrage beim Server, Figur 1, und anschließend mit Online-Abfrage, Figur 2. Die zwei Vorgänge können beim gleichen oder auch bei unterschiedlichen Werteempfängern stattfinden.
Der Benutzer identifiziert sich für die Werteübermittlung mit seiner eindeutigen ID, (Identifizierung), z. B. mittels seiner intelligenten Vorrichtung. Da der Werteempfänger in dem ersten Fall keine Verbindung zum Server aufbaut, wird zuerst geprüft ob ausreichend Kredit (oder Guthaben) auf der intelligenten Vorrichtung ist (Wenn (W_{Forderung} <= W_{Kredit}) ...). Falls ja, wird der Kredit um die Forderung vermindert (Dann ($_{Forderung} = $_{Kredit} - $_{Forderung})). Ansonsten wird der Vorgang abgelehnt. Bei Erfolg wird die gewünschte Dienstleistung/Ware übergeben.

Beim nächsten Vorgang baut der Werteempfänger eine Verbindung zum Server um die vom Empfänger geforderten Werte abzubuchen, Figur 2. Zugleich wird auch der Kredit auf der intelligenten Vorrichtung dem Server mitgeteilt. Anschließend authorisiert der Sender die Werteübermittlung mit einer PIN. Das Konto des Senders auf dem Server wird sowohl um den verbrauchten Kredit ($_{Kreditrahmen} - $_{Kredit}) wie auch um die geforderten Werte reduziert. Wenn das Werteguthaben auf dem Konto ausreicht, bestätigt der Server die Werteübermittlung (Bestätigung) und überträgt den vereinbarten Kreditrahmen. Dabei kann ein Wertebetrag in Höhe des Kreditrahmens auf dem Konto reserviert werden. Der Kredit auf der intelligenten Vorrichtung wird wieder zum Kreditrahmen gesetzt und der Werteempfänger übergibt die Dienstleistung/Ware.

Auf dem Server wird der Wertestand (W_{Konto}) und der vereinbarte Kreditrahmen (W_{Kreditrahmen}). Auf der Intelligenten Vorrichtung wird neben der eindeutigen ID auch der noch verfügbare Wertekredit (W_{Kredit}) gespeichert. Weiter kann eine Transaktionshistorie für Offline-Übermittlungen gespeichert werden.

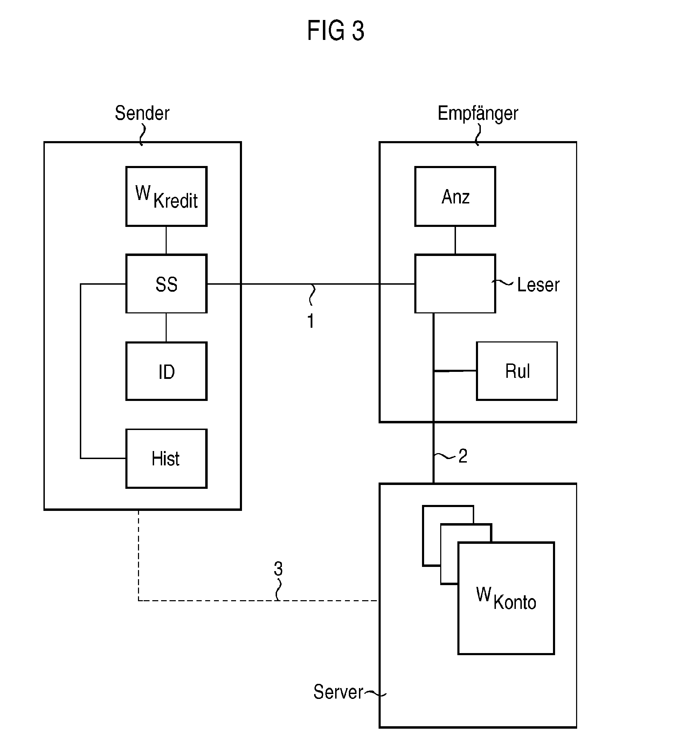

Figur 3 zeigt in einem System die Komponenten, die bei der einer Werteübermittlung online und auch offline zusammenwirken. Der Sender hat ein Identifizierungsmittel, (ID, intelligente Vorrichtung), auf welchem sein Kreditrahmen gespeichert ist (W_{Kredit}). Optional werden bereits durchgeführte Transaktionen in einem Speicher gesichert (Hist). Nach Lesen der intelligenten Vorrichtung in einer Schreib-/Leseeinrichtung (Leser) können nun Transaktionsdaten zwischen dem Werteempfänger und dem Sender übertragen werden (1). Der Empfänger kann dabei entscheiden, ob die Übertragung Online oder Offline erfolgen soll, dabei können bestimmte Regeln angewendet werden (Rul). Soll eine Online Übertragung erfolgen, dann baut der Sender eine Verbindung zu dem Server auf, wo das Werteguthaben (W_{Konto}) des Senders verwaltet wird, (2). Über diese Verbindung kann gleichzeitig der Kreditrahmen, den der Kunde hat, wieder erhöht werden (3).

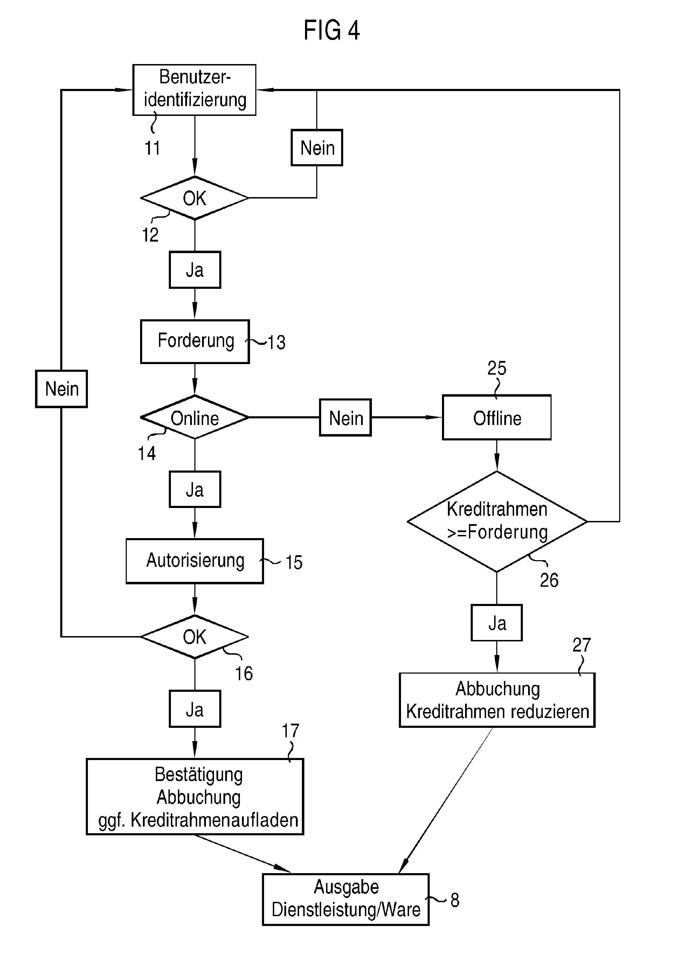

In Figur 4 ist ein Ablaufdiagramm dargestellt, welches die Transaktionen beim Werteempfänger erläutert. Nach einer erfolgreichen Benutzeridentifikation (11), und Übertragung des zu übertragenden Guthabens (13), wird die Entscheidung getroffen, ob eine Online (14) oder Offline (25) Überweisung erfolgen soll. Bei der Online-Übermittlung wird eine zusätzliche Authorisierung durchgeführt, nach Durchführung der Abbuchung auf dem Wertekonto wird eventuell der Kreditrahmen auf dem Identifizierungsmedium wieder aufgeladen. Bei einer Offline Übermittlung wird zunächst überprüft, ob der Kreditrahmen ausreichend ist, die zu übertragenden Werte zu decken, danach wird die Übertragung durchgeführt und der Kreditrahmen reduziert. Als letzter Schritt erfolgt in beiden Fällen die Ausgabe der Dienstleistung/Ware.

## Patentansprüche

1. Verfahren zum elektronischen Austausch von Werten ( von einem Server-Guthaben (W_{Konto}) auf einem zentralen Server (Server) zu einem Empfängerguthaben (Empfänger)
bei dem ein Teil-Guthaben (W_{Kredit}) des Server-Guthabens (W_{Konto}) gesperrt ist und
auf einer intelligenten Vorrichtung (ID) zur Identifizierung dieses Teil-Guthaben (W_{Kredit}) zur Verfügung gestellt ist und
in einem ersten Schritt ein Übertragungsguthaben (W_{Kauf}) von dem Teil-Guthaben (W_{Kredit}) abgezogen wird, und
in einem zweiten Schritt bei einem Verbindungsaufbau zu dem zentralen Server das Server-Guthaben (W_{Konto}) um das Übertragungsguthaben (W_{Kauf}) reduziert wird.

2. Verfahren nach Patentanspruch 1,
**dadurch gekennzeichnet, dass**
es sich bei der intelligenten Vorrichtung (ID) um eine Chip-Karte, eine Transponderkarte, eine SIM-Karte oder ein äquivalentes tragbares Speichermedium handelt.

3. Verfahren nach einem der vorigen Patentansprüche,
**dadurch gekennzeichnet, dass**
der erste Schritt des Verfahrens mehrfach ausgeführt wird, bevor der zweite Schritt ausgeführt wird.

4. Verfahren nach einem der vorigen Patentansprüche,
**dadurch gekennzeichnet, dass**
der Verbindungsaufbau des zweiten Schrittes gekoppelt ist mit der Übertragung eines weiteren Übertragungsguthabens zu einem weiteren Empfänger.

5. Verfahren nach einem der vorigen Patentansprüche,
**dadurch gekennzeichnet, dass**
der Guthabenempfänger entscheidet, ob der zweite Schritt zusammen mit dem ersten Schritt ausgeführt wird.

6. Verfahren nach einem der vorigen Patentansprüche,
**dadurch gekennzeichnet, dass**
bei einem Übertragungsvorgang angezeigt wird, wie groß das verbleibende Teil-Guthaben (W_{Kredit}) ist.

7. Verfahren nach einem der vorigen Patentansprüche,
**dadurch gekennzeichnet, dass**
in einem dritten Schritt das Teil-Guthaben (W_{Kredit}) auf der intelligenten Vorrichtung (ID) erhöht wird.

8. Verfahren zum elektronischen Austausch von Werten von einem Server-Guthaben (W_{Konto}) auf einem zentralen Server (Server) zu einem Empfängerguthaben (Empfänger) bei dem auf einer intelligenten Vorrichtung (ID) ein Teil-Guthaben (W_{Kredit}) des Server-Guthabens (W_{Konto}) zur Verfügung gestellt ist und
der Empfänger nach Lesen der intelligenten Vorrichtung (ID) entscheidet, ob er die Übertragung in einem Abbuchungsvorgang gemäß Patentanspruch 1 durchführt, oder ob eine Verbindung zu dem zentralen Server (Server) aufgebaut wird, und das Übertragungsguthaben (W_{Kauf}) direkt von dem Server-Guthaben (W_{Konto}) übertragen wird.

9. Verfahren nach Patentanspruch 8,
**dadurch gekennzeichnet, daß**
die Entscheidung abhängig von der Höhe des Übertragungsguthabens (W_{Kauf}) getroffen wird.

10. Vorrichtung (Sender) zum elektronischen Austausch von Werten mit
Mitteln zur Identifizierung (ID) und
Mitteln zur Speicherung eines Teil-Guthabens (W_{Kredit}), welches einen Anteil eines Server-Guthabens (W_{Konto}) repräsentiert und
Mitteln (SS) zum Aufbau einer Verbindung (1) zu einem Lesegerät (Empfänger) über die ein Übertragungsguthaben (W_{Kauf}) zu einem Empfängerguthaben (Händler) übertragen werden kann.

11. Vorrichtung nach Patentanspruch 8
mit Mitteln zur Speicherung (Hist) von Informationen über bereits durchgeführte Übertragungstransaktionen.

12. Vorrichtung (Empfänger) zum Empfangen eines Übertragungsguthabens (W_{Kauf}) mit
Mitteln zum Empfangen eines Übertragungsguthabens (Leser) über eine erste Verbindung (1) und
Mitteln zum Aufbau einer zweiten Verbindung (2) zu einem zentralen Server (Server) und
Mitteln zum Speichern von Entscheidungsregeln (Rul), ob zum Empfang des Übertragungsguthabens die zweite Verbindung werden soll.

13. Vorrichtung nach Patentanspruch 10
mit Mitteln zur Anzeige (Anz) der Höhe des verbliebenen Teil-Guthabens (W_{Kredit}).
